# FASCICULE DE BREVET EUROPEEN

(11) **EP 3 921 217 B1**
(45) Date de publication et mention de la délivrance du brevet: **01.04.2026**
(21) Numéro de dépôt: 20702320.1
(22) Date de dépôt: 04.02.2020
(51) Int. Cl.: B62D 25/08, B62D 25/20

(54) **PARTIE ARRIÈRE DE STRUCTURE DE VÉHICULE AUTOMOBILE RENFORCÉE**
VERSTÄRKTES HECKSTRUKTURTEIL EINES KRAFTFAHRZEUGS
REINFORCED REAR STRUCTURE PART OF A MOTOR VEHICLE

(30) Priorité: 08.02.2019 FR 1901289
(43) Date de publication de la demande: 15.12.2021
(73) Titulaire: Renault s.a.s, 92100 Boulogne Billancourt (FR)
(72) Inventeur: REDA, Belaidouni, 78320 Le Mesnil Saint Denis (FR)
(74) Mandataire: Renault Group
(86) Numéro de dépôt international: PCT/EP2020/052747
(87) Numéro de publication internationale: WO 2020/161133

(56) Documents cités:
- JP-A- 2006 015 798
- JP-A- 2008 081 041
- JP-A- 2010 042 726

## Description

La présente invention se rapporte à une partie arrière de structure de véhicule automobile renforcée.

Les véhicules automobiles connus présentent une structure dont la partie arrière comprend deux longerons arrière s'étendant sensiblement parallèlement entre eux de part et d'autre d'un plan médian de la structure et une traverse arrière reliant lesdits deux longerons ensemble. Ils comportent également un plancher arrière monté en appui sur lesdits deux longerons et sur ladite traverse arrière. Le plancher arrière reçoit ainsi une banquette et des rails de fixation de la banquette, installés sur le plancher de part et d'autre du plan médian et parallèles à ce dernier.

La rigidité de la partie arrière de structure résulte de la quantité de matériau mise en œuvre et de l'épaisseur des tôles utilisées, notamment pour le plancher. Aussi, la résistance des ancrages de la banquette notamment, et des ceintures de sécurité y reliées, dépend en partie de cette rigidité.

Par conséquent, des compromis sont trouvés entre la sécurité des passagers des véhicules automobiles, laquelle doit sans cesse être améliorée, et le poids des véhicules qui lui, doit diminuer pour améliorer les performances de consommation en carburant. Les documents JP 2008 081041 A et JP 2006 015798 A décrivent une structure de véhicule automobile comprenant deux longerons arrière parallèles reliés entre eux par une traverse arrière, un plancher arrière monté en appui sur les longerons et sur la traverse arrière, deux rails de fixation installés sur le plancher arrière, s'étendant selon une direction sensiblement parallèle auxdits longerons pour pouvoir recevoir une banquette mobile en translation, ainsi qu'une plaque de renfort centrale.

En outre, doivent être sans cesse améliorés, les coûts de production des véhicules automobiles, tant au niveau des pièces et des éléments mis en œuvre, que les temps de montage des véhicules.

Aussi, un problème qui se pose et que vise à résoudre la présente invention est de fournir une partie arrière de structure de véhicule automobile dont le coût de production est amélioré. De surcroît, le problème est également de fournir une partie arrière de structure de véhicule, dont la rigidité est augmentée.

Dans ce but, il est proposé une partie arrière de structure de véhicule automobile comprenant : deux longerons arrière sensiblement parallèles entre eux et une traverse arrière reliant lesdits deux longerons ensemble ; un plancher arrière monté en appui sur lesdits deux longerons et sur ladite traverse arrière ; et, au moins deux rails de fixation installés à distance l'un de l'autre sur ledit plancher arrière, lesdits au moins deux rails de fixation s'étendant selon une direction sensiblement parallèle auxdits longerons pour pouvoir recevoir une banquette mobile en translation. La partie arrière comprend en outre une plaque de renfort centrale montée sur ladite traverse arrière et venant s'étendre entre lesdits deux longerons sous ledit plancher arrière au droit desdits rails de fixation.

Ainsi, une caractéristique de l'invention réside dans la mise en œuvre d'une plaque de renfort centrale solidaire de la traverse arrière et qui s'étend sous le plancher. De la sorte, on vient renforcer localement le plancher dans une zone particulièrement sollicitée comme on l'expliquera ci-après. Partant, on peut mettre en œuvre un plancher peu épais, permettant alors d'alléger la partie arrière de structure. La plaque de renfort centrale s'étend selon un plan moyen sensiblement parallèle à un autre plan moyen défini par les longerons et la traverse.

Avantageusement, lesdits rails de fixation et ladite plaque de renfort centrale sont reliés ensemble à travers ledit plancher. Ainsi, la plaque de renfort centrale est en applique sous le plancher tandis que les rails de fixation, au moins en partie, viennent eux-mêmes en applique sur le plancher au droit de la plaque de renfort centrale. Partant, les rails de fixation peuvent être fixés au plancher au moyen d'organes vissables par exemple, s'étendant de la plaque de renfort au rail de fixation en traversant le plancher. Les rails de fixation sont ainsi reliés de manière rigide à la traverse par le biais du plancher et de la plaque de renfort centrale. Comme on l'expliquera plus en détail dans la suite de la description, d'autres éléments intermédiaires peuvent être mis en œuvre pour pouvoir relier les rails de fixation au plancher, toujours grâce à la plaque de renfort centrale. Avantageusement, les rails de fixation comprennent des glissières.

De plus, et selon un mode de réalisation de l'invention particulièrement avantageux, ladite plaque de renfort centrale comprend en outre une pluralité de goujons de fixation adaptés à venir traverser ledit plancher pour pouvoir relier lesdits deux rails de fixation audit plancher. Ainsi, la plaque de renfort est équipée de goujons de fixation préalablement installés dans des positions déterminées, tandis que le plancher présente des orifices correspondants pour autoriser le passage de ces goujons de fixation. Aussi, comme on l'expliquera plus en détail dans la suite de la description, les goujons de fixation sont par exemple soudés à la plaque de renfort centrale. Ils peuvent être également, selon un autre mode de mise en œuvre, sertis dans l'épaisseur de la plaque de renfort centrale. Et les goujons de fixation permettent alors de venir fixer des pieds de banquette, comme on l'expliquera ci-après au moyen d'écrous.

Au surplus, ladite plaque de renfort centrale comprend une pluralité de goujons de guidage adaptés à venir traverser ledit plancher. Ainsi, sensiblement parallèlement aux goujons de fixation, des goujons de guidage, autrement dénommés pilotes, permettent le guidage et l'accostage de la banquette lors de sa mise en position pour être fixée au plancher.

Aussi, ladite plaque de renfort centrale présente deux pattes de fixation venant s'appliquer à plat sur ladite traverse. Les pattes de fixation présentent une partie formant cornière et venant s'ajuster sur deux parois adjacentes sensiblement perpendiculaires entre elles de la traverse. De la sorte, on obtient une plus grande rigidité de la liaison entre la plaque de renfort centrale et la traverse. De surcroît, lesdites deux pattes de fixation sont reliées par soudure à ladite traverse. Des cordons de soudures sont ainsi réalisés entre le bord des pattes et la traverse pour assurer le fixation.

Préférentiellement, ladite plaque de renfort centrale présente au surplus deux enfoncements en saillie s'étendant respectivement dans lesdites pattes de fixation pour augmenter la rigidité desdites pattes de fixation. Les enfoncements s'étendent ainsi, d'une part selon une composante verticale en saillie de la plaque de renfort à l'opposé du plancher, et selon une composante horizontale, dans les pattes de fixation à l'opposé des faces d'appui sur la traverse. Les enfoncements permettent de rigidifier la plaque de renfort centrale.

En outre, ladite plaque de renfort centrale comprend deux paires de goujons de fixation, les goujons de l'une desdites deux paires étant montés de chaque côté de l'un desdits enfoncements, tandis que les goujons de l'autre desdites deux paires sont montés de chaque côté de l'autre desdits enfoncements. De la sorte, les pieds de banquette peuvent être solidarisés au plancher, au droit des enfoncements de la plaque de renfort centrale, de manière à augmenter la force de liaison entre la banquette et le plancher, et conséquemment, à améliorer l'ancrage des ceintures comme on l'expliquera ci-après.

De plus, ladite plaque de renfort centrale présente un enfoncement central en saillie pour recevoir une attache adaptée à maintenir un réservoir installé sous ledit plancher arrière entre lesdits deux longerons. Ledit réservoir vient par exemple recouvrir par le dessous, en partie le plancher et la plaque de renfort centrale. Et afin de l'y maintenir, une sangle peut être amarrée à l'attache précitée.

Aussi, ladite plaque de renfort centrale est formée d'une seule pièce métallique emboutie. Elle est par exemple réalisée dans une tôle d'acier d'une épaisseur comprise entre 1 mm et 2 mm.

D'autres particularités et avantages de l'invention ressortiront à la lecture de la description faite ci-après d'un mode de réalisation particulier de l'invention, donné à titre indicatif mais non limitatif, en référence aux dessins annexés sur lesquels :
[Fig.1] est une vue schématique de dessous d'un élément de l'invention ;
[Fig.2] est une vue schématique de dessus de l'élément de l'invention représenté sur la figure [FIG.1] ;
[Fig.3] est une vue schématique partielle de dessus d'une partie arrière de structure de véhicule automobile ;
[Fig.4] est une vue partielle de dessous de l'objet de la figure [FIG.3] équipé de l'élément illustré sur les figures [FIG.1] et [FIG.2] ;
[Fig.5] est une vue schématique de l'objet de la figure [FIG.3] sous le même angle de vue comprenant d'autres éléments de l'invention ;
[Fig.6] est une vue schématique partielle de dessus de l'objet de la figure [FIG.5] comprenant encore d'autres éléments de l'objet de l'invention ;
[Fig.7] est une vue schématique de l'objet de la figure [FIG.6] sous un angle de vue sensiblement perpendiculaire à celui de la figure [FIG.6] ; et,
[Fig.8] est une vue schématique de dessous de l'objet de la figure [FIG.3] équipée.

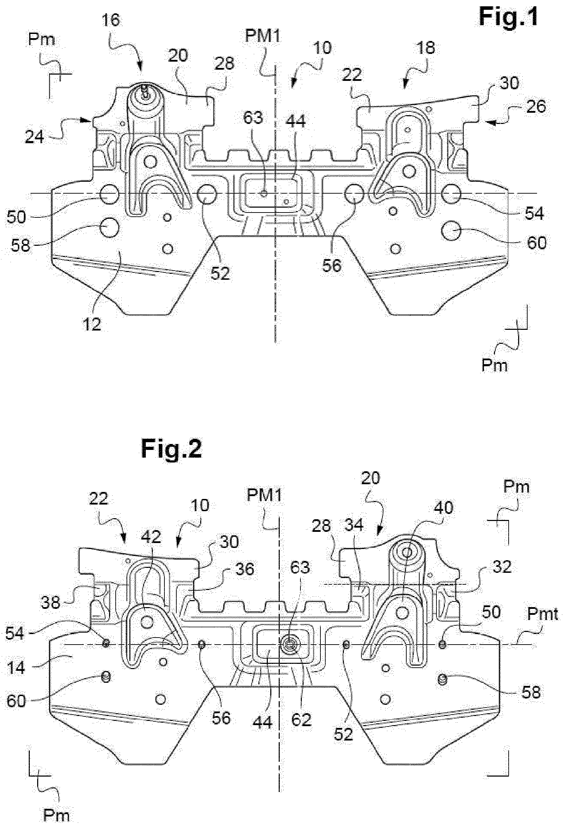

La figure [FIG.1] montre une plaque de renfort centrale 10 conforme à l'invention, ici vue de dessous, et présentant une face externe 12. Elle s'étend selon un plan moyen Pm parallèle au plan de la figure. La figure [FIG.2] montre à l'opposé, une face interne 14 de la plaque de renfort centrale 10. Elle est obtenue par découpage emboutissage d'une seule tôle métallique, en acier par exemple, d'une épaisseur de 1,6 mm selon un mode préféré de réalisation. L'épaisseur de ladite tôle métallique est par exemple comprise entre un millimètre et deux millimètres.

S'agissant de la découpe, la plaque de renfort 10 présente deux ailes 16, 18 opposées l'une de l'autre par rapport à un premier plan médian PM1. Aussi, la plaque de renfort 10 définit deux pattes de fixation opposées, une première 20 et une seconde 22, fortement embouties comme on va l'expliquer ci-après.

Tout d'abord, les pattes de fixation 20, 22 présentent chacune une partie formant cornière 24, 26. Les parties formant cornières 24, 26 sont définies par les génératrices sensiblement communes. Ainsi, les parties formant cornières 24, 26 présentent deux ailes libres 28, 30 sensiblement coplanaires et sensiblement parallèles au plan moyen Pm défini par la plaque de renfort 10. Aussi, les parties formant cornières 24, 26 présentent des bordures d'appui latérales 32, 34 ; 36, 38 qui s'étendent respectivement sensiblement perpendiculairement aux ailes libres 28, 30 et que l'on retrouve illustrés sur la figure [FIG.2]. Sur cette figure, les bordures d'appui latérales 32, 34 ; 36, 38 s'étendent en avant du plan de la figure. Aussi, les bordures d'appui latérales 32, 34 ; 36, 38 s'étendent sensiblement dans un même plan.

En outre, la plaque de renfort centrale 10 présente deux enfoncements latéraux, un premier 40 et un second 42, qui s'étendent, sur la figure [FIG.2], selon une composante perpendiculaire au plan moyen Pm, vers l'arrière du plan de la figure. Les deux enfoncements 40, 42 s'étendent également, sur la figure [FIG.2], selon les composantes du plan moyen Pm, dans les pattes de fixation 20, 22, et jusque dans les deux ailes libres 28, 30. Ces enfoncements 40, 42 visent essentiellement à renforcer mécaniquement la plaque de renfort 10 spécifiquement au niveau des pattes de fixation 20, 22.

En outre, la plaque de renfort 10 présente un enfoncement central 44, sensiblement entre les deux enfoncements latéraux 48, 42 et venant s'étendre en saillie de la surface externe 12 tout comme les enfoncements latéraux 48, 42. On expliquera plus en détail dans la suite de la description, le rôle de l'enfoncement central 44.

De plus, on observera sur la figure [FIG.2], que la plaque de renfort centrale 10 présente deux paires de goujons de fixation, une première paire 50, 52 et une seconde paire 54, 56 qui s'étendent en saillie, vers l'avant du plan de la figure. La première paire de goujons de fixation 50, 52 vient s'étendre au droit de la première patte de fixation 20, les deux goujons 50, 52 de chaque côté du premier enfoncement 40, tandis que la seconde paire de goujon de fixation 54, 56 vient s'étendre, elle, au droit de la seconde patte de fixations 22, les deux goujons 54, 56 de chaque côté du second enfoncement 42. Aussi, les goujons de fixation 50, 52, 56, 54 sont alignés selon un plan moyen transversal Pmt, sensiblement perpendiculaire au premier plan médian PM1.

On observera sur la figure [FIG.1] que les goujons de fixation 50, 52, 56, 54 présentent chacun une tête plate soudée sur la face externe 12. La tige des goujons de fixation 50, 52, 56, 54 traversent alors la paroi de la plaque de renfort 10 pour venir s'étendre à l'opposé, en saillie de la face interne 14.

On observera sur la figure [FIG.2], que la plaque de renfort 10 présente également deux goujons de guidage, un premier 58 et un second 60. Le premier goujon de guidage 58 s'étend au droit du goujon de fixation le plus externe 50, à l'opposé de la première patte de fixation 20, tandis que le second goujon de guidage 60 s'étend au droit de l'autre goujon de fixation le plus externe 54, à l'opposé de la seconde patte de fixations 22. Comme on l'expliquera ci-après les deux goujons de guidage 58, 60 forment pilotes de montage, et ils s'étendent sensiblement parallèlement aux goujons de fixation 50, 52, 54, 56.

Au surplus, sur la figure [FIG.2], on observera que la plaque de renfort 10 est équipée d'un écrou 62 installé au fond de l'enfoncement central 44 au droit d'un orifice 63 traversant la plaque. On retrouve sur la figure [FIG.1] l'orifice 63 au sommet de l'enfoncement 44. Aussi, on retrouve les goujons de guidage 58, 60 équipés d'une tête plate également soudée.

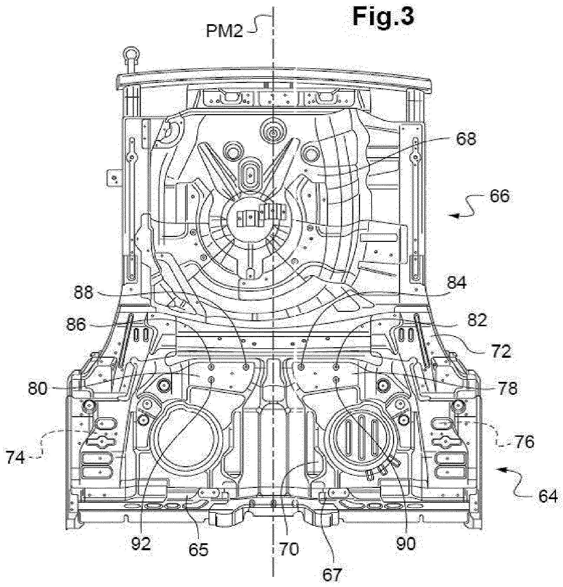

On se référera à présent à la figure [FIG.3] montrant partiellement en vue de dessus une partie arrière de structure de véhicule automobile. Cette partie arrière s'étend longitudinalement, d'une partie d'assise 64 s'étendant dans l'habitacle vers une partie de coffre 66 à l'extrémité arrière du véhicule automobile. Cette partie de coffre 66 présente un bac 68 réalisé dans une plaque emboutie pour recevoir une roue de secours. Aussi, cette partie arrière présente un second plan médian PM2, la divisant en deux parties latérales opposées l'une de l'autre. La partie d'assise 64 présente deux bords d'appui avant 65, 67 symétriques l'un de l'autre par rapport au second plan médian PM2.

S'agissant de la partie d'assise 64, elle présente un plancher 70 en appui, vers l'arrière du véhicule automobile sur une traverse arrière 72 et de chaque côté, sur deux longerons parallèles 74, 76. Le plancher 70 est fait d'une tôle métallique présentant une épaisseur comprise entre 0,4 mm et 1 mm, par exemple 0,6 mm. Le plancher 70 présente vers la partie de coffre 66, deux zones d'appui, une première 78 et une seconde 80 symétriques l'une de l'autre par rapport au second plan médian PM2. La première zone d'appui 78 présente une première paire d'orifices, un premier orifice externe 82 et un premier orifice interne 84, tandis que symétriquement, la seconde zone d'appui 80 présente une seconde paire d'orifices, un second orifice externe 86 et un second orifice interne 88.

De surcroît, la première zone d'appui 78 présente, au droit du premier orifice externe 82, un premier perçage 90, tandis que la seconde zone d'appui 80 présente, au droit du second orifice externe 86 un second perçage 92.

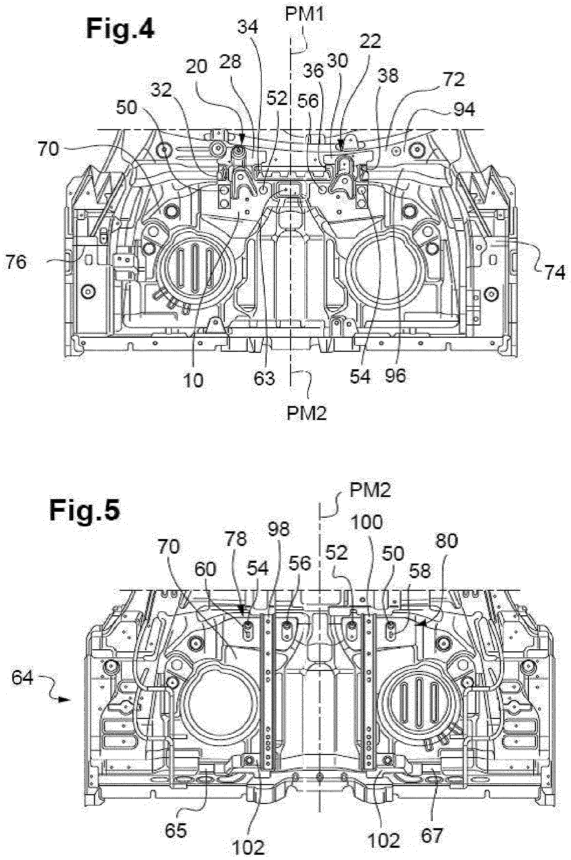

On retrouve plus en détail et vue de dessous sur la figure [FIG.4], les deux longerons parallèles 74, 76 reliés entre eux par la traverse arrière 72. On observera que la traverse arrière 72 présente une face d'appui 94 sensiblement parallèle au plan moyen de la partie arrière de structure et une face contiguë 96 sensiblement perpendiculaire à la face d'appui 94. On retrouve également sur la figure [FIG.4], et en coopération de forme, la plaque de renfort centrale 10 en applique à cheval, sur la traverse arrière 72 et sur la face arrière du plancher 70 au droit des zones d'appui 78, 80, et de façon que les deux plans médians PM1 et PM2 coïncident. La plaque de renfort centrale 10 s'étend sensiblement à équidistance des deux longerons 74, 76 et entre les deux.

Il y a non seulement coopération de forme entre la plaque de renfort centrale 10, la traverse arrière 72 et le plancher 70, mais au surplus, les deux paires de goujons de fixation 50, 52 ; 56, 54 sont venus s'engager à travers les deux paires d'orifices 82, 84 ; 86, 88, tandis que les deux goujons de guidage 58, 60 sont venus s'engager respectivement dans les deux perçages externes 90, 92. De la sorte, les deux paires de goujons de fixation 50, 52 ; 56, 54 et les deux goujons de guidage 58, 60 viennent s'étendre en saillie du plancher 70.

On observera que les deux pattes de fixation 20, 22 coopèrent directement avec la traverse arrière 72, de façon que les deux ailes libres 28, 30 viennent en applique sur la face d'appui 94, tandis que les bordures d'appui latérales 32, 34 ; 36, 38 viennent respectivement en appui sur la face contiguë 96. Aussi, la plaque de renfort centrale 10 vient en applique en sous face du plancher 70.

La plaque de renfort centrale 10 est montée solidaire de la traverse arrière 72 par l'intermédiaire des pattes de fixation 20, 22, lesquelles y sont soudées.

On se référera maintenant à la figure [FIG.5] illustrant l'objet de la figure [FIG.4] à l'opposé en vue de dessus et montrant au surplus, à titre d'illustration deux glissières 98, 100 symétriques l'une de l'autre par rapport au second plan médian PM2. Chacune des glissières 98, 100 comporte un pied avant 102 installé sur les bords d'appui avant 65, 67 de la partie d'assise 64. Les glissières 98, 100 s'étendent parallèlement au plan médian PM2, des bords d'appui avant 65, 67 jusqu'au droit des zones d'appui 78, 80 du plancher 70. On retrouve sur cette figure les deux paires de goujons de fixation 50, 52 ; 54, 56 ainsi que les deux goujons de guidage 58, 60.

Sur cette figure, les glissières 98, 100 sont libres par rapport aux zones d'appui 78, 80 et aux goujons de fixation 54, 56, 52, 50, à des fins explicatives pour illustrer leur position finale.

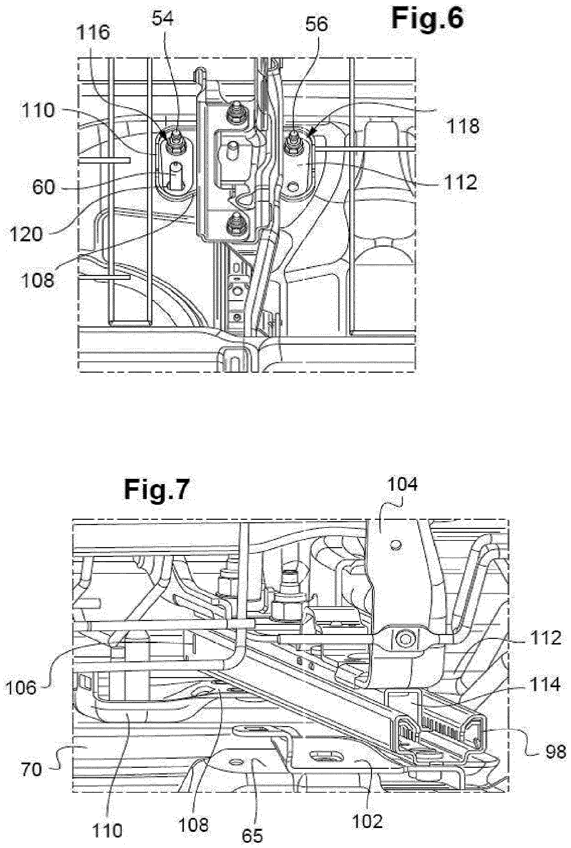

Aussi, on se référera à la figure [FIG.7], illustrant en détail la glissière 98 permettant de relier l'ossature 104 d'une banquette coulissante et le plancher 70.

On retrouve sur cette [FIG.7] le pied avant 102 permettant de maintenir en position fixe l'extrémité avant de la glissière 98 sur le bord d'appui avant 65. La glissière 98 présente une extrémité arrière 106 équipée d'un pied arrière 108 présentant deux oreilles 110, 112 symétriques l'une de l'autre par rapport à la glissière 98. Aussi, l'ossature 104 de la banquette est équipée d'un coulisseau 114 monté en translation dans la glissière 98.

Aussi, lors du montage de la banquette coulissante, elle est entraînée à l'intérieur de l'habitacle, équipée de coulisseau 114 installés dans leur glissière 98, 100, lesquelles glissières 98, 100 sont équipées de leur pied avant 102 et de leur pied arrière 108.

De la sorte, lors de l'accostage de la banquette coulissante sur le plancher 70, et comme illustré partiellement sur la figure [FIG.6], les deux oreilles 110, 112, des pieds 108 permettent le guidage d'une part, et la fixation d'autre part. En effet, le pied arrière 108, et symétriquement celui de l'autre glissière 100, présente deux perçages de fixation 116, 118, un dans chacune des oreilles 110, 112 et un perçage de guidage 120 dans l'oreille 110 la plus externe. Partant, lors de l'accostage, les goujons de guidage 60, 58 viennent s'engager à l'intérieur du perçage de guidage 120 tandis que la banquette coulissante est entraînée vers le plancher 70. Conséquemment, les oreilles 110, 112 s'ajustent de manière à ce que les goujons de fixation 54, 56 et pour l'autre pied arrière, 52, 50, s'engagent respectivement à travers les deux perçages de fixation 116, 118. Les pieds arrière 108 sont alors maintenus en position fixe sur le plancher 70, au moyen d'écrous vissés sur les goujons de fixation 54, 56, 52, 50, tandis que les pieds avant 102 sont maintenus en position fixe sur les bords d'appui avant 65, 67 au moyen de vis de fixation.

De la sorte, les pieds arrière 108 de la banquette coulissante sont reliés de manière plus rigide au plancher 70 grâce à la plaque de renfort centrale 10. En effet, cette dernière augmente la rigidité des zones d'appui 78, 80 du plancher 70. Conséquemment, l'ancrage des ceintures sur la banquette est également plus rigide vis-à-vis de la partie arrière de la structure du véhicule automobile.

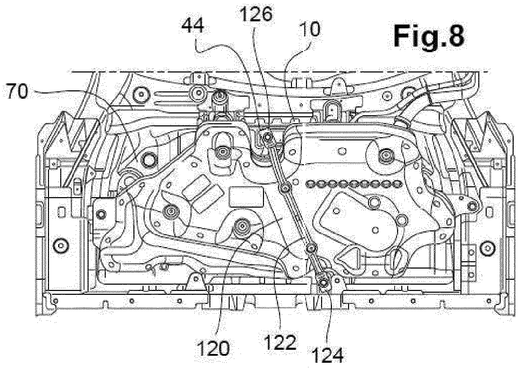

On se reportera sur la figure [FIG.8] illustrant l'objet de la figure [FIG.4], auquel est rapporté un réservoir transversal 120, lequel réservoir recouvre en sous face le plancher 70 est partiellement la plaque de renfort centrale 10. Aussi, le réservoir transversal 120 est notamment maintenu contre le plancher 70 au moyen d'une sangle 122. La sangle 122 présente une extrémité d'ancrage avant 124 montée en position fixe à l'opposé du bord d'appui avant 65 de la partie d'assise 64, et une extrémité d'ancrage arrière 126 montée au sommet de l'enfoncement central 44 grâce à une vis engagée à travers l'orifice 63 dans l'écrou 62.

De la sorte, grâce à la plaque de renfort centrale 10, les glissières 98, 100 formant rails pour la banquette coulissante, sont fixées de manière plus rigide au plancher 70. Aussi, grâce à la plaque de renfort centrale 10 équipée des goujons de guidage formant pilote, l'accostage de la banquette coulissante est facilité. De surcroît, grâce a une meilleure liaison et une liaison plus rigide entre la banquette coulissante et le plancher 70, l'ancrage de la ceinture de sécurité arrière est par ricochet, d'une meilleure résistance. Au surplus, la plaque de renfort centrale 10 permet un meilleur maintien du réservoir du véhicule automobile.

## Revendications

1. Partie arrière de structure de véhicule automobile comprenant :
- deux longerons arrière (74, 76) sensiblement parallèles entre eux et une traverse arrière (72) reliant lesdits deux longerons (74, 76) ensemble ;
- un plancher arrière (70) monté en appui sur lesdits deux longerons (74, 76) et sur ladite traverse arrière (72) ; et,
- au moins deux rails de fixation (98, 100) installés à distance l'un de l'autre sur ledit plancher arrière (70), lesdits au moins deux rails de fixation (98, 100) s'étendant selon une direction sensiblement parallèle auxdits longerons (74, 76) pour pouvoir recevoir une banquette mobile en translation ;
la partie arrière comprenant en outre une plaque de renfort centrale (10) montée sur ladite traverse arrière (72) et venant s'étendre entre lesdits deux longerons (74, 76) sous ledit plancher arrière (70) au droit desdits rails de fixation (98, 100) et en ce que ladite plaque de renfort centrale (10) présente deux pattes de fixation (20, 22) venant s'appliquer à plat sur ladite traverse (72), **caractérisée en ce que** lesdits rails de fixation (98, 100) et ladite plaque de renfort centrale (10) sont reliés ensemble à travers ledit plancher (70).

2. Partie arrière de structure de véhicule automobile selon la revendication 1, **caractérisée en ce que** ladite plaque de renfort centrale (10) comprend en outre une pluralité de goujons de fixation (50, 52, 54, 56) adaptés à venir traverser ledit plancher (70) pour pouvoir relier lesdits deux rails de fixation (98, 100) audit plancher (70).

3. Partie arrière de structure de véhicule automobile selon la revendication 1 ou 2, **caractérisée en ce que** ladite plaque de renfort centrale (10) comprend une pluralité de goujons de guidage (58, 60) adaptés à venir traverser ledit plancher (70).

4. Partie arrière de structure de véhicule automobile selon l'une quelconque des revendications 1 à 3, **caractérisée en ce que** lesdites deux pattes de fixation (20, 22) sont reliées par soudure à ladite traverse (72).

5. Partie arrière de structure de véhicule automobile selon l'une quelconque des revendications 1 à 4, **caractérisée en ce que** ladite plaque de renfort centrale (10) présente deux enfoncements (40, 42) en saillie s'étendant respectivement dans lesdites pattes de fixation (20, 22) pour augmenter la rigidité desdites pattes de fixation.

6. Partie arrière de structure de véhicule automobile selon la revendication 5, **caractérisée en ce que** ladite plaque de renfort centrale (10) comprend deux paires de goujons de fixation (50, 52 ; 54, 56), les goujons de l'une (50, 52) desdites deux paires étant montés de chaque côté de l'un (40) desdits enfoncements, tandis que les goujons de l'autre (54, 56) desdites deux paires sont montés de chaque côté de l'autre (42) desdits enfoncements.

7. Partie arrière de structure de véhicule automobile selon l'une quelconque des revendications 1 à 6, **caractérisée en ce que** ladite plaque de renfort centrale (10) présente un enfoncement central (44) en saillie pour recevoir une attache (62) adaptée à maintenir un réservoir (120) installé sous ledit plancher arrière (70) entre lesdits deux longerons (74, 76).

8. Partie arrière de structure de véhicule automobile selon l'une quelconque des revendications 1 à 7, **caractérisée en ce que** ladite plaque de renfort centrale (10) est formée d'une seule pièce métallique emboutie.

## Patentansprüche

1. Heckteil einer Kraftfahrzeugstruktur, das Folgendes aufweist:
- zwei hintere Längsträger (74, 76), die im Wesentlichen parallel zueinander verlaufen, und einen hinteren Querträger (72), der die beiden Längsträger (74, 76) miteinander verbindet;
- einen hinteren Boden (70), der auf den beiden Längsträgern (74, 76) und dem hinteren Querträger (72) aufliegt; und
- mindestens zwei Befestigungsschienen (98, 100), die in einem Abstand voneinander auf dem hinteren Boden (70) angebracht sind, wobei sich die mindestens zwei Befestigungsschienen (98, 100) in einer Richtung erstrecken, die im Wesentlichen parallel zu den Längsträgern (74, 76) verläuft, um eine verschiebbare Sitzbank aufnehmen zu können;
wobei das Heckteil darüber hinaus eine mittlere Verstärkungsplatte (10) aufweist, die auf dem hinteren Querträger (72) angebracht ist und sich zwischen den beiden Längsträgern (74, 76) unter dem hinteren Boden (70) in Höhe der Befestigungsschienen (98, 100) erstreckt, und wobei die mittlere Verstärkungsplatte (10) zwei Befestigungslaschen (20, 22) aufweist, die flach auf dem Querträger (72) aufliegen, **dadurch gekennzeichnet, dass** die Befestigungsschienen (98, 100) und die mittlere Verstärkungsplatte (10) über den Boden (70) miteinander verbunden sind.

2. Heckteil einer Kraftfahrzeugstruktur nach Anspruch 1, **dadurch gekennzeichnet, dass** die mittlere Verstärkungsplatte (10) darüber hinaus eine Vielzahl von Befestigungsbolzen (50, 52, 54, 56) aufweist, die dazu ausgelegt sind, den Boden (70) zu durchqueren, um die beiden Befestigungsschienen (98, 100) mit dem Boden (70) zu verbinden.

3. Heckteil einer Kraftfahrzeugstruktur nach Anspruch 1 oder 2, **dadurch gekennzeichnet, dass** die mittlere Verstärkungsplatte (10) eine Vielzahl von Führungsbolzen (58, 60) aufweist, die so ausgelegt sind, dass sie den Boden (70) durchqueren können.

4. Heckteil einer Kraftfahrzeugstruktur nach einem der Ansprüche 1 bis 3, **dadurch gekennzeichnet, dass** die beiden Befestigungslaschen (20, 22) durch Schweißen mit dem Querträger (72) verbunden sind.

5. Heckteil einer Kraftfahrzeugstruktur nach einem der Ansprüche 1 bis 4, **dadurch gekennzeichnet, dass** die mittlere Verstärkungsplatte (10) zwei vorstehende Vertiefungen (40, 42) aufweist, die sich jeweils in die Befestigungslaschen (20, 22) erstrecken, um die Steifigkeit der Befestigungslaschen zu erhöhen.

6. Heckteil einer Kraftfahrzeugstruktur nach Anspruch 5, **dadurch gekennzeichnet, dass** die mittlere Verstärkungsplatte (10) zwei Paare von Befestigungsbolzen (50, 52; 54, 56) aufweist, wobei die Bolzen eines (50, 52) der beiden Paare auf jeder Seite einer (40) der Vertiefungen angebracht sind, während die Bolzen des anderen (54, 56) der beiden Paare auf jeder Seite der anderen (42) der Vertiefungen angebracht sind.

7. Heckteil einer Kraftfahrzeugstruktur nach einem der Ansprüche 1 bis 6, **dadurch gekennzeichnet, dass** die mittlere Verstärkungsplatte (10) eine mittige, vorstehende Vertiefung (44) aufweist, um eine Befestigung (62) aufzunehmen, die dazu geeignet ist, einen unter dem Heckboden (70) zwischen den beiden Längsträgern installierten Tank (120) zu halten (74, 76).

8. Heckteil einer Kraftfahrzeugstruktur nach einem der Ansprüche 1 bis 7, **dadurch gekennzeichnet, dass** die mittlere Verstärkungsplatte (10) aus einem einzigen tiefgezogenen Metallteil besteht.

## Claims

1. Rear part of a motor vehicle structure, comprising:
- two rear side-members (74, 76) which are substantially parallel to one another, and a rear cross-member (72) connecting said two side-members (74, 76) to one another;
- a rear floor (70) fitted so as to bear against said two side-members (74, 76) and against said rear cross-member (72); and
- at least two securing rails (98, 100) which are installed spaced from one another on said rear floor (70), said at least two securing rails (98, 100) extending in a direction substantially parallel to said side-members (74, 76), in order to be able to receive a bench seat which is movable in translation;
the rear part further comprising a central reinforcement plate (10) which is fitted on said rear cross-member (72) and extends between said two side-members (74, 76) below said rear floor (70), in line with said securing rails (98, 100), and in that said central reinforcement plate (10) has two securing lugs (20, 22) which are pressed flat against said cross-member (72), **characterized in that** said securing rails (98, 100) and said central reinforcement plate (10) are connected together through said floor (70).

2. Rear part of a motor vehicle structure according to Claim 1, **characterized in that** said central reinforcement plate (10) further comprises a plurality of securing studs (50, 52, 54, 56) which are designed to pass through said floor (70), in order to be able to connect said two securing rails (98, 100) to said floor (70).

3. Rear part of a motor vehicle structure according to Claim 1 or 2, **characterized in that** said central reinforcement plate (10) comprises a plurality of guide studs (58, 60) which are designed to pass through said floor (70).

4. Rear part of a motor vehicle structure according to any one of Claims 1 to 3, **characterized in that** said two securing lugs (20, 22) are connected to said cross-member (72) by welding.

5. Rear part of a motor vehicle structure according to any one of Claims 1 to 4, **characterized in that** said central reinforcement plate (10) has two projecting indentations (40, 42) extending respectively into said securing lugs (20, 22) for increasing the rigidity of said securing lugs.

6. Rear part of a motor vehicle structure according to Claim 5, **characterized in that** said central reinforcement plate (10) comprises two pairs of securing studs (50, 52; 54, 56), the studs (50, 52) of one of said two pairs being fitted one on each side of one (40) of said indentations, whereas the studs (54, 56) of the other one of said two pairs are fitted one on each side of the other one (42) of said indentations.

7. Rear part of a motor vehicle structure according to any one of Claims 1 to 6, **characterized in that** said central reinforcement plate (10) has a projecting central indentation (44) for receiving a fastener (62) which is designed to retain a tank (120) installed below said rear floor (70) between said two side-members (74, 76).

8. Rear part of a motor vehicle structure according to any one of Claims 1 to 7, **characterized in that** said central reinforcement plate (10) is formed of a single stamped metal part.
